(19) Europäisches Patentamt

European Patent Office

Office européen des brevets

(11) EP 1 357 541 A2

(12) EUROPEAN PATENT APPLICATION

(43) Date of publication:
29.10.2003 Bulletin 2003/44

(51) Int Cl.⁷: **G10L 15/06**, G10L 15/20

(21) Application number: 03009344.7

(22) Date of filing: 24.04.2003

(84) Designated Contracting States:
**AT BE BG CH CY CZ DE DK EE ES FI FR GB GR
HU IE IT LI LU MC NL PT RO SE SI SK TR**
Designated Extension States:
**AL LT LV MK**

(30) Priority: 26.04.2002 JP 2002126939
17.05.2002 JP 2002142998

(71) Applicant: **Pioneer Corporation**
**Meguro-ku, Tokyo (JP)**

(72) Inventor: **Toyama, Soichi**
**Tsurugashima-shi, Saitama-ken, 350-2288 (JP)**

(74) Representative: **Popp, Eugen, Dr. et al**
**MEISSNER, BOLTE & PARTNER**
**Postfach 86 06 24**
**81633 München (DE)**

(54) **Speaker adaptation for speech recognition**

(57)     A true/false judgment on a result of speech recognition is made with high accuracy using a less volume of processing. By comparing acoustic models (HMMsb) against the feature vector sequence V(n) of utterances, a recognition result (RCG) specifying the acoustic model (HMMsb) having the maximum likelihood, a first score (FSCR) indicting the value of the maximum likelihood, and a second score (SSCR) indicating the value of the second highest likelihood are found. Then, by comparing an evaluation value (FSCR) $\times$ (FSCR - SSCR) based on the first score (FSCR) and the second score (SSCR) with a pre-set threshold value (THD), a true/false judgment on the recognition result (RCG) is made. When the recognition result (RCG) is judged as being true, speaker adaptation is applied to the acoustic models (HMMsb), and when the recognition result (RCG) is judged as being false, speaker adaptation is not applied to the acoustic models (HMMsb). It is thus possible to improve the accuracy of speaker adaptation.

Robust speaker adaptation which remains unsusceptible to influences of background noises is achieved. Initial acoustic models Mc are stored in advance in a speaker adapted model storing section, and a noise adapting section (13) generates noise adapted models Mc' by applying noise adaptation to the initial acoustic models Mc pre-stored in the speaker adapted model storing section. A speaker adaptation parameter calculating section (14) generates speaker adaptation parameters P based on the noise adapted models Mc' and a feature vector sequence V (n) of utterances from the speaker, and a acoustic model updating section (15) generates speaker adapted models Mc'' by applying speaker adaptation processing to the initial acoustic models Mc using the speaker adaptation parameters P.

The initial acoustic models Mc are replaced with the speaker adapted models Mc'' so as to be updated and newly stored in the speaker adapted model storing section (11). At the time of speech recognition, the noise adapting section (13) generates speaker adapted models Mreg adapted to noises by applying noise adaptation to the updated and newly stored speaker adapted models Mc'' instead of the initial acoustic models Mc. Then, aspeech recognition section (19) performs speech recognition by comparing sequences formed by the speaker adapted models Mreg adapted to noises against the feature vector sequence V(n) of utterances to be recognized.

FIG.6

**Description**

BACKGROUND OF THE INVENTION

The present invention relates to a speech recognition apparatus and a speech recognition method for performing speech recognition through speaker adaptation, for example.
The invention also relates to a speech recognition apparatus and a speech recognition method for performing speech recognition using, for example, acoustic models adapted to a speaker.
One of the reasons which make speech recognition difficult is that utterances from a speaker vary generally from individual to individual due to the differences in the vocal organ, the habit of utterances, etc.
Conventionally, as a robust speech recognition algorithm for utterances influenced by differences between individuals, there has been proposed a speaker adaptation method which can increase recognition accuracy for a particular speaker through speaker adaptation using MLLR (Maximum Likelihood Linear Regression), MAP (Maximum a Posteriori) estimation, etc.
According to this speaker adaptation method, a number of acoustic models (initial acoustic models) in units of phonemes or words are prepared from utterances of an unspecified number of speakers, and these acoustic models are adapted to a particular speaker for whom speaker adaptation is performed, based on a characteristic quantity of utterance.
Incidentally, in order to perform adequate speaker adaptation, there is a need to apply speaker adaptation to acoustic models in units of phonemes or words according to a speech recognition result.
To be more concrete, for example, when a speaker utters "Tokyo," the acoustic model of "Tokyo" should be adapted to the speaker only when the utterances are recognized correctly as "Tokyo" through speech recognition. If the acoustic model of "Tokyo" is adapted to the speaker according the result of an incorrect recognition, an incorrect speaker adaptation will be performed.
Suppose that a speaker utters "Tokyo" and the utterances are recognized incorrectly as "Kyoto." Then, if the acoustic model of "Kyoto" is adapted to the speaker based on a quantity of features of the utterances of "Tokyo," an adequate speaker adaptation can not be performed, which may possibly reduce the speech recognition accuracy after speaker adaptation.
Hence, it is important, as a prerequisite for speaker adaptation, to judge in a reliable manner whether the utterances coincide with the result of speech recognition, that is, whether the result of speech recognition is true or false.
According to the conventional speaker adaptation method, however, a huge volume of processing is needed to make a true/false judgment on the result of speech recognition, and therefore, it has been increasingly becoming important to develop a novel judgment processing method capable of performing speaker adaptation speedily and adequately without causing a speaker to feel mentally stressed.
Meanwhile, in the field of a speech recognition technique, speech recognition is performed using acoustic models of an unspecified speaker learned from a speech database of a huge volume.
However, because the acoustic models of an unspecified speaker are learned based on utterance data from an unspecified number of speakers, there is a problem that the recognition performance is relatively high only in the case of speech recognition of utterances from a speaker who speaks in a standard manner, but the recognition performance is not necessarily high in the case of speech recognition of utterances from a speaker who speaks characteristically.
To eliminate this problem, there has been developed a speaker adaptation method for performing speaker-independent speech recognition adequately by adapting the acoustic models of an unspecified speaker to a particular speaker based on his utterances and then using the acoustic models adapted to this particular speaker for speech recognition.
According to the conventional speaker adaptation method, acoustic models of an unspecified speaker (hereinafter, referred to as the initial acoustic models) in the units of sub-words, such as phonemes, are generated using a speech database of a huge volume. Then, the initial acoustic models are adapted to a speaker in the pre-processing step before speech recognition is actually started. In other words, a speaker is requested to utter words or sentences in the pre-processing step, and the initial acoustic models are adapted to the speaker based on a feature vector sequence of the utterances. Speaker adapted models taking into account differences between individuals are thus generated.
-At the time of actual speech recognition, the feature vector sequence of the utterances that the speaker uttered to be recognized is compared against the sequences composed of the aforementioned speaker adapted models, and the speaker adapted model sequence having the maximum likelihood is used as the result of speech recognition.
However, when speaker adaptation is applied to the initial acoustic models, background noises in an utterance environment are superimposed on utterances from the speaker.

For this reason, according to the conventional speaker adaptation method, speaker adaptation is performed based on not only utterances, but also a feature vector sequence of the utterances on which background noises are superimposed (that is, background noise superimposed utterances), which makes it difficult to generate accurate speaker adapted models.

In particular, when speaker adaptation is performed using utterances uttered in a noisy environment, influences of background noises are so large that in some cases it becomes difficult to generate speaker adapted models which adequately reflect the speaker characteristics.

When speech recognition is actually performed using the speaker adapted models adapted to the speaker through the conventional speaker adaptation method, in a case where the background noises in an environment at the time of speech recognition are different from the background noises in an environment at the time of speaker adaptation described above, there arises a problem that the effect achieved by speaker adaptation, that is, the effect of improving speech recognition accuracy, becomes unsatisfactory.

## SUMMARY OF THE INVENTION

The present invention is devised to solve the above problems, and therefore, has an object to provide a speech recognition apparatus and a speech recognition method capable of performing speaker adaptation speedily and adequately.

The invention has another object to provide a speech recognition apparatus and a speech recognition method for performing robust speaker adaptation which can remain unsusceptible to influences of background noises.

In order to achieve the above and other objects, a first aspect of the invention provides a speech recognition apparatus for applying speaker adaptation to acoustic models based on feature vectors of utterances, and the apparatus includes: speech recognition means for comparing the acoustic models against the feature vector of utterances, and outputting a recognition result specifying a sequence of acoustic models having maximum likelihood, a first score indicating a value of the maximum likelihood, and a second score indicating a value of second highest likelihood; judging means for comparing an evaluation value based on the first score and the second score with a pre-set threshold value, and judging the recognition result as being true when the evaluation value is in a specific relation with respect to the threshold value; and speaker adaptation processing means for applying speaker adaptation to the acoustic models when the judging means judges the recognition result as being true.

Also, a fifth aspect of the invention provides a speech recognition method for applying speaker adaptation to acoustic models based on feature vectors of utterances, and the method includes: a first step of comparing the acoustic models against the feature vector of utterances, and outputting a recognition result specifying a sequence of acoustic models having maximum likelihood, a first score indicating a value of the maximum likelihood, and a second score indicating a value of second highest likelihood; a second step of comparing an evaluation value based on the first score and the second score with a pre-set threshold value, and judging the recognition result as being true when the evaluation value is in a specific relation with respect to the threshold value; and a third step of applying speaker adaptation to the acoustic models when the recognition result is judged as being true in the second step.

According the speech recognition apparatus of the first aspect and the speech recognition method of the fifth aspect of the invention, at the time of speaker adaptation processing, a recognition result specifying the acoustic model having the maximum likelihood, the first score indicating the value of the maximum likelihood, and the value of the second highest likelihood are found by comparing the acoustic models against the feature vector of the utterances, and further, the evaluation value based on the first score and the second score is compared with the pre-set threshold value. Then, when the evaluation value is in the specific relation with respect to the threshold value, the recognition result is judged as being true, and speaker adaptation is applied to the acoustic models. It is thus possible to perform adequate speaker adaptation based on the true recognition result.

A second aspect of the invention provides a speech recognition apparatus according to the first aspect, wherein: the judging means judges the recognition result as being false when the evaluation value is not in the specific relation with respect to the threshold value; and the speaker adaptation processing means does not apply speaker adaptation to the acoustic models when the recognition result is judged as being false.

A sixth aspect of the invention provides a speech recognition method according to the fifth aspect, wherein: in the second step, the recognition result is judged as being false when the evaluation value is not in the specific relation with respect to the threshold value; and in the third step, speaker adaptation is not applied to the acoustic models when the recognition result is judged as being false.

According to the speech recognition apparatus of the second aspect and the speech recognition method of the sixth aspect of the invention, when the recognition result is judged as being false, speaker adaptation is not applied to the acoustic models. Hence, deterioration in speech recognition accuracy can be prevented by not performing speaker adaptation according to a false recognition result.

A third aspect of the invention provides a speech recognition apparatus according to the first aspect, wherein the evaluation value is computed from a difference value between the first score and the second score.

A seventh aspect of the invention provides a speech recognition method according to the fifth aspect, wherein the evaluation value is computed from a difference value between the first score and the second score.

According to the speech recognition apparatus of the third aspect and the speech recognition method of the seventh aspect of the invention, by computing the evaluation value from a difference value between the first score and the second score, it is possible to improve the judgment accuracy by judging the recognition result as being true when the evaluation value obtained through the computation is in the specific relation with respect to the threshold value, and by judging the recognition result as being false when the evaluation value is not in the specific relation with respect to the threshold value.

A fourth aspect of the invention provides a speech recognition apparatus according to the second aspect, which further includes means for inhibiting an output of the recognition result and providing information indicating that the recognition result is false when the judging means judges the recognition result as being false.

An eighth aspect of the invention provides a speech recognition method according to the sixth aspect, when the recognition result is judged as being false in the second step, an output of the recognition result is inhibited and information is provided to indicate that the recognition result is false.

According to the speech recognition apparatus of the fourth aspect and the speech recognition method of the eighth aspect of the invention, it is possible to provide effective information to the user as to whether adequate speaker adaptation has been performed.

Also, in order to achieve the above and other objects, a ninth aspect of the invention provides a speech recognition apparatus, which includes: storage means having initial acoustic models; noise adapting means for generating noise adapted models by applying noise adaptation to the initial acoustic models in the storage means using background noises at a time of speaker adaptation; speaker adaptation parameter calculating means for performing speaker adaptation computation with respect to the noise adapted models generated in the noise adapting means, using utterances uttered at the time of the speaker adaptation, and thereby calculating a speaker adaptation parameter for converting the noise adapted models into noise-superimposed speaker adapted models; and acoustic model updating means for generating speaker adapted models by applying speaker adaptation to the initial acoustic models in the storage means using the speaker adaptation parameter, and replacing the initial acoustic models with the speaker adapted models so as to be updated and newly stored in the storage means.

A tenth aspect of the invention provides a speech recognition apparatus according to the ninth aspect, which further includes: recognition processing means for performing speech recognition processing at a time of speech recognition, wherein the noise adapting means generates speaker adapted models adapted to noises by applying noise adaptation to the speaker adapted models updated and newly stored in the storage means, using background noises during a silent period at the time of the speech recognition, and supplies the speaker adapted models adapted to noises to the speech recognition means as acoustic models for speech recognition of the utterances.

An eleventh aspect of the invention provides a speech recognition apparatus, which includes: storage means having initial acoustic models; noise adapting means for generating noise adapted models by applying noise adaptation to the initial acoustic models in the storage means, using background noises during a silent period at a time of speech recognition; recognition processing means for performing speech recognition by comparing utterances uttered during an utterance period at the time of the speech recognition and to be subjected to speech recognition, against the noise adapted models generated in the noise adapting means; speaker adaptation parameter calculating means for performing speaker adaptation computation with respect to the noise adapted models generated in the noise adapting means, using the utterances to be subjected to speech recognition, and thereby calculating a speaker adaptation parameter for converting the noise adapted models into noise-superimposed speaker adapted models; and acoustic model updating means for generating speaker adapted models by applying speaker adaptation to the initial acoustic models in the storage means using the speaker adaptation parameter, and replacing the initial acoustic models with the speaker adapted models so as to be updated and newly stored in the storage means.

A twelfth aspect of the invention provides a speech recognition apparatus according to the eleventh aspect, wherein the speaker adaptation parameter calculating means and the acoustic model updating means generate the speaker adapted models and replace the initial acoustic models with the speaker adapted models so as to be updated and newly stored in the storage means when a reliability . of a recognition result from the recognition processing means is high.

A thirteenth aspect of the invention provides a speech recognition method, which includes: a noise adaptation processing step of generating noise adapted models by applying noise adaptation to initial acoustic models stored in storage means using background noises at a time of speaker adaptation; a speaker adaptation parameter calculating step of performing speaker adaptation computation with respect to the noise adapted models generated in the noise adaptation processing step, using utterances uttered at the time of the speaker adaptation, and thereby calculating a speaker adaptation parameter for converting the noise adapted models into noise-superimposed speaker adapted models; and a acoustic model updating step of generating speaker adapted models by applying speaker adaptation to the initial acoustic models in the storage means using the speaker adaptation parameter, and replacing the initial acoustic models with the speaker adapted models so as to be updated and newly stored in the storage means.

A fourteenth aspect of the invention provides a speech recognition method according to the thirteenth aspect, wherein: in the noise adaptation processing step, speaker adapted models adapted to noises are generated by applying noise adaptation to the speaker adapted models updated and newly stored in the storage means, using background noises during a silent period at a time of speech recognition, and the method further includes a speech recognition processing step of performing speech recognition by comparing the speaker adapted models adapted to noises against utterances to be subjected to speech recognition during an utterance period at the time of the speech recognition.

A fifteenth aspect of the invention provides a speech recognition method, which includes: a noise adaptation processing step of generating noise adapted models by applying noise adaptation to initial acoustic models stored in storage means using background noises during a silent period at a time of speech recognition; a recognition processing step of performing speech recognition by comparing utterances uttered during an utterance period at the time of the speech recognition and to be subjected to speech recognition, against the noise adapted models generated in the noise adaptation processing step; a speaker adaptation parameter calculating step of performing speaker adaptation computation with respect to the noise adapted models generated in the noise adaptation processing step, using the utterances to be subjected to speech recognition, and thereby calculating a speaker adaptation parameter for converting the noise adapted models into noise-superimposed speaker adapted models; and a acoustic model update processing step of generating speaker adapted models by applying speaker adaptation to the initial acoustic models in the storage means using the speaker adaptation parameter, and replacing the initial acoustic models with the speaker adapted models so as to be updated and newly stored in the storage means.

A sixteenth aspect of the invention provides a speech recognition method according to the fifteenth aspect, wherein, in the speaker adaptation parameter calculating step and the acoustic model update processing step, the speaker adapted models are generated in such a manner that the initial acoustic models are replaced with the speaker adapted models so as to be updated and newly stored in the storage means when a reliability of a recognition result in the recognition processing step is high.

According to the speech recognition apparatus of the ninth aspect and the speech recognition method of the thirteenth aspect of the invention, at the time of speaker adaptation, noise adaptation is applied to the initial acoustic models, and speaker adaptation computation is performed with respect to the noise adapted models obtained through the noise adaptation. Further, the speaker adaptation parameter used to convert the noise adapted models into the noise-superimposed speaker adapted models is calculated, and the speaker adapted models to be used for speech recognition are generated by applying speaker adaptation to the initial acoustic models using the speaker adaptation parameter. The initial acoustic models are thus updated to the speaker adapted models.

Consequently, adverse effects of the background noises at the time of speaker adaptation can be reduced, which makes it possible to generate the speaker adapted models highly effective for adapting the speaker-independent characteristics, to which speaker adaptation is originally addressed.

According to the noise recognition apparatus of the tenth aspect and the noise recognition method of the fourteenth aspect, at the time of speech recognition after the speaker adaptation, noise adaptation is applied to the updated and newly stored speaker adapted models using the background noises during a silent period at the time of the speech recognition. The speaker adapted models adapted to noises are thus generated. Subsequently, speech recognition is performed by comparing the speaker adapted models adapted to noises against the utterances subjected to speech recognition which are uttered during the utterance period at the time of speech recognition.

According to the speech recognition apparatus of the eleventh aspect and the speech recognition method of the fifteenth aspect, speaker adaptation is performed at the same time of the speech recognition.

To be more specific, the noise adapted models are generated by applying noise adaptation to the initial acoustic models using background noises during the silent period at the time of the speech recognition, and speech recognition is performed by comparing the utterances subjected to speech recognition which are uttered during the utterance period at the time of the speech recognition against the noise adapted models. Further, speaker adaptation computation is performed with respect to the noise adapted models using the utterances subjected to speech recognition, and the speaker adaptation parameter is thereby calculated, through the use of which the noise adapted models are converted into the noise-superimposed speaker adapted models. Then, the speaker adapted models are generated by applying speaker adaptation to the initial acoustic models using the speaker adaptation parameter, and the initial acoustic models are replaced with and thereby updated to the speaker adapted models thus generated.

As a consequence, by subjecting a number of utterances to speech recognition, it is possible to update the initial acoustic models with the speaker adapted models adapted to the speaker-independent characteristics at a higher degree, which makes it possible to improve the speech recognition performance.

According to the speech recognition apparatus of the twelfth aspect and the speech recognition method of the sixteenth aspect of the invention, by generating the speaker adapted models and updating the initial acoustic models when the result of the speech recognition is highly reliable, adequate speaker adaptation can be applied depending on the utterance environment or the like.

The initial acoustic models referred to herein are defined as the acoustic models stored in the storage means before speaker adaptation is applied. In the invention, the initial acoustic models stored in the storage means are updated to the speaker adapted models generated through speaker adaptation, and it should be noted that the updated speaker adapted acoustic models are used as the initial acoustic models thereafter. To be more specific, the initial acoustic models are stored in the storage means in the first place, and after the initial acoustic models are updated to the speaker adapted models, the processing is repeated by deeming the updated speaker adapted models as being the initial acoustic models.

BRIEF DESCRIPTION OF THE DRAWINGS

FIG. 1 is a view showing a configuration of a voice recognition apparatus of a first embodiment;
FIG. 2A through FIG. 2C are views to explain the principle in making a true/false judgment on a recognition result with accuracy;
FIG. 3 is a flowchart detailing an operation of the voice recognition apparatus of the first embodiment;
FIG. 4 is a view showing a configuration of a voice recognition apparatus of a second embodiment;
FIG. 5 is a view showing a configuration of a voice recognition apparatus of a third embodiment;
FIG. 6 is a flowchart detailing an operation of the voice recognition apparatus of the third embodiment;
FIG. 7 is a view showing a configuration of a voice recognition apparatus of a fourth embodiment; and
FIG. 8 is a flowchart detailing an operation of the voice recognition apparatus of the fourth embodiment.

DETAILED DESCRIPTION OF THE PREFERRED EMBODIMENTS

The following description will describe preferred embodiments of the invention with reference to the accompanying drawings.

(First Embodiment)

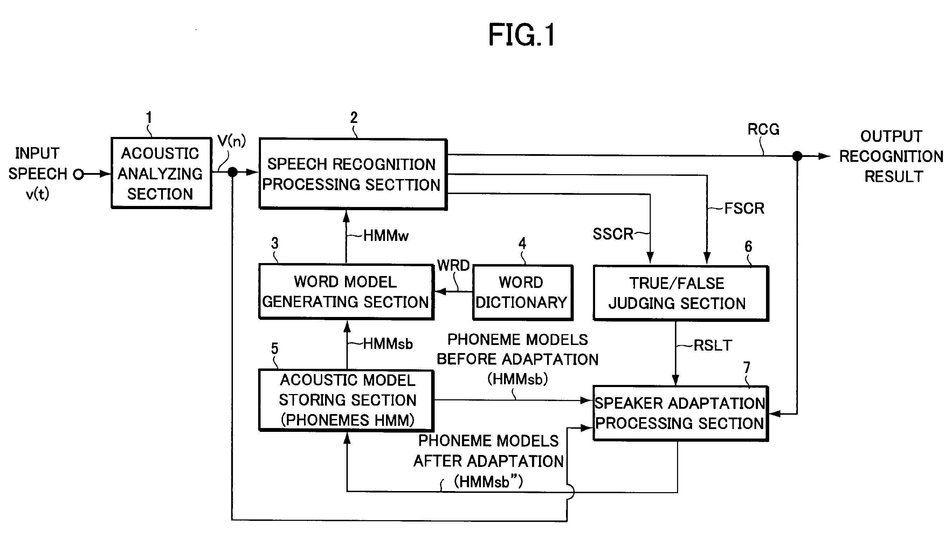

A first embodiment of the invention will now be explained with reference to FIG. 1 through FIG. 3. FIG. 1 is a block diagram showing a configuration of a speech recognition apparatus of this embodiment.

Referring to FIG. 1, the speech recognition apparatus of this embodiment is configured to perform speech recognition using HMM (Hidden Markov Models), and is composed of an acoustic analyzing section 1 for outputting a feature vector sequence $V(n)$ in a cepstrum region converted from a speech input signal $v(t)$ outputted from a microphone (not shown) serving as sound pick-up means, a speech recognition processing section 2, a word model generating section 3, a word dictionary 4, an acoustic model storing section 5, a true/false judging section 6, and a speaker adaptation processing section 7.

In the acoustic model storing section 5 are stored acoustic models (standard phoneme HMM) in units of subwords, such as phonemes, generated from speeches from an unspecified speaker.

Although it will be described in more detail below, acoustic models (standard phoneme HMM) found in advance from speeches from an unspecified speaker are stored in the acoustic model storing section 5 as initial acoustic models, and the initial acoustic models are updated to acoustic models adapted to a speaker when speaker adaptation is performed later. Hence, when the speaker adaptation is continued or performed, the processing is repeated in such a manner that the speaker adapted acoustic models stored in the acoustic model storing section 5 are adapted to the speaker, and these speaker adapted acoustic models are further adapted to the speaker. Repetitively updated speaker adapted acousticmodels are thus stored in the acoustic model storing section 5. By updating the speaker adapted acoustic models in this manner, it is possible to improve the recognition performance for speeches from the speaker.

In the word dictionary 4 are pre-stored dictionary data (also referred to as text data) composed of a number of words and sentences.

The word model generating section 3 combines acoustic models HMMsb of respective phonemes stored in the acoustic model storing section 5 according to the data of respective words and sentences stored in the word dictionary 4 (hereinafter, referred to collectively as the word data) WRD, and thereby generates acoustic models (hereinafter, referred to as the word model) HMMw corresponding to the word data WRD.

The speech recognition processing section 2 compares in real time the respective word models HMMw generated in the word model generating section 3 against the feature vector sequence $V(n)$ of utterances supplied from the acoustic analyzing section 1. The speech recognition processing section 2 compares all the word models HMMw against the feature vector sequence $V(n)$ and outputs the word model HMMw having the maximum likelihood as a recognition result RCG.

Further, the speech recognition processing section 2 outputs, in addition to the recognition result RCG, a value of the aforementioned maximum likelihood as a first score FSCR and a value of the second highest likelihood (the largest likelihood value second to the maximum likelihood) as a second score SSCR.

To be more concrete, when a speaker utters "Tokyo," for example, the speech recognition processing section 2 compares the feature vector sequence V(n) of the utterances against all the word models HMMw. Here, assume that the word model of "Tokyo" has the maximum likelihood, and the word model of another word, "Kyoto," has the likelihood with the second largest value. Then, the speech recognition processing section 2 outputs the value of the maximum likelihood as the first score FSCR and the value of the second highest likelihood as the second score SSCR. This is a case where the recognition result RCG is true, because the utterances of "Tokyo" coincide with the word model of "Tokyo" corresponding to the first score FSCR.

On the other hand, in a case where the recognition result RCG is fal-se, for example, when the speech recognition processing section 2 performs speech recognition for the utterances of "Tokyo" from a speaker, the word model of "Kyoto" has the maximum likelihood and the word model of "Tokyo" has the likelihood with the second largest value. Then, the speech recognition processing section 2 outputs the value of the maximum likelihood as the first score FSCR and the value of the second highest likelihood as the second score SSCR. Because the utterances of "Tokyo" do not coincide with the word model of "Kyoto" corresponding to the first score FSCR, the recognition result RCG is proved to be false.

The true/false judging section 6 applies the first score FSCR and the second score SSCR outputted from the speech recognition processing section 2 upon speech recognition of utterances to a score evaluation function expressed by Equation (1) below, and compares a score evaluation value G (L) thus found with a predetermined threshold value THD.

(Equation (1))

$$G(L) = FSCR \times (FSCR - SSCR) \tag{1}$$

In the right side of Equation (1), a variable FSCR is a value of the first score FSCR (the value of the maximum likelihood), a variable SSCR is a value of the second score SSCR (the value of the second highest likelihood), and the score evaluation value G(L) is a variable associated with the likelihood L obtained by the evaluation computation in the right side.

When the score evaluation value G(L) is greater than the threshold THD, (that is, G(L) > THD), the true/false judging section 6 judges the recognition result RCG as being true, and judges the recognition result RCG as being false when the score evaluation value G(L) is equal to or less than the threshold value THD, (that is, G(L) ≤ THD), after which the true/false judging section 6 outputs a judging result RSLT indicating true or false.

The score evaluation function in Equation (1) above, the threshold value THD, and the judgment principle of the true/false judging section 6 will now be explained in detail.

The score evaluation function in Equation (1) above and the threshold value THD are determined in advance experimentally through a statistical method as follows.

Initially, an arbitrary speaker is requested to utter as many words and sentences as a predetermined number N, and the first score FSCR and the second score SSCR outputted for each of all the N words and sentences are measured experimentally through speech recognition processing by the word dictionary 4, the word model generating section 3, and the speech recognition processing section 2.

The utterances are classified into the words and sentences for which the utterances coincide with the recognition result RCG (that is, words and sentences upon correct recognition), and the words and sentences for which the utterances do not coincide with the recognition result RCG (that is, words and sentences upon incorrect recognition).

For example, assume that a total number N of the words and sentences the speaker uttered as experiment samples is 500, of which X, herein 400, words and sentences are recognized correctly, and Y, herein 100, words and sentences are recognized incorrectly. Then, 500 words and sentences are classified into X and Y words and sentences.

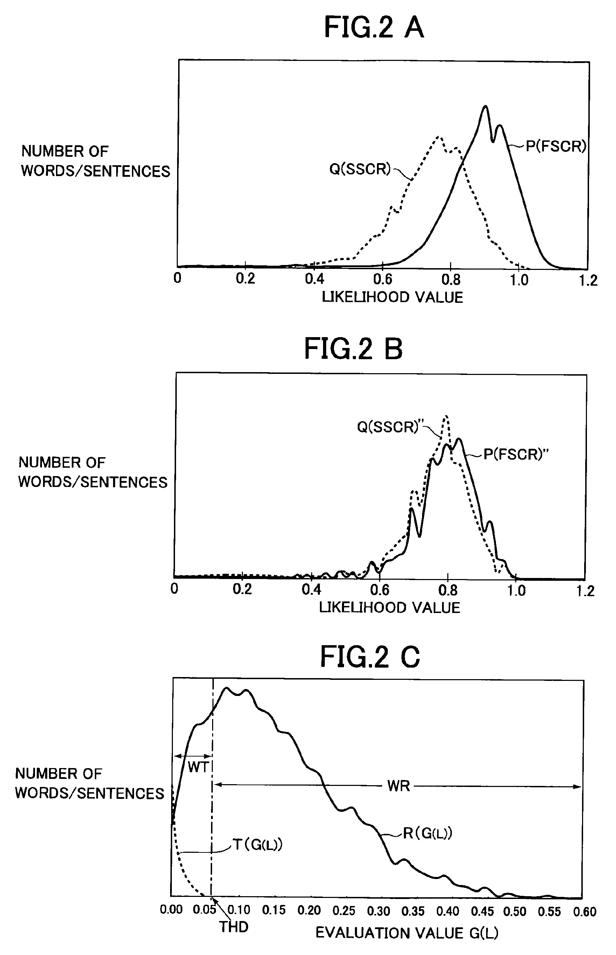

Further, as shown in FIG. 2A, a histogram P(FSCR) showing the distribution of the words and sentences in number with respect to the value of the first score FSCR (the value of the maximum likelihood) and a histogram Q (SSCR) showing the distribution of the words and sentences in number with respect to the value of the second score SSCR (the value of the second highest likelihood) are generated for the respective words and sentences recognized correctly (in this case, X = 400 words and sentences).

In other words, both the histograms P(FSCR) and Q(SSCR) are generated for the respective 400 words and sentences which are recognized correctly. Further, because the value of the first score FSCR (the value of the maximum likelihood) and the value of the second score SSCR (the value of the second highest likelihood) outputted from the speech recognition processing section 2 vary in response to the speech recognition environment or the like, the histogram P(FSCR) indicated by a solid line in the drawing is obtained by allocating 400 words and sentences to the respective values of the first score FSCR. Likewise, the histogram Q(SSCR) indicated by a dotted line in the drawing is obtained by allocating 400 words and sentences to the respective values of the second score SSCR.

Also, as shown in Fig. 2B, as to the words and sentences recognized incorrectly (in this case, Y = 100 words and sentences), a histogram P(FSCR)" indicating the distribution of the words and sentences in number with respect to the value of the first score FSCR, and a histogram Q(SSCR)" indicating the distribution of the words and sentences in number with respect to the value of the second score-SSCR are generated.

In other words, both the histograms P(FSCR)" and Q(SSCR)" shown in FIG. 2B are generated for the respective 100 words and sentences which are recognized incorrectly. Further, even in a case where the speech recognition processing section 2 makes recognition incorrectly, the value of the first score FSCR (the value of the maximum likelihood) and the value of the second score SSCR (the value of the second highest likelihood) also vary in response to the speech recognition environment or the like. Hence, the histogram P(FSCR)" indicated by a solid line in FIG. 2B is obtained by allocating 100 words and sentences to the respective values of the first score FSCR, and the histogram Q(SSCR)" indicated by a dotted line in FIG. 2B is obtained by allocating 100 words and sentences to the respective values of the second score SSCR.

The histograms obtained in this manner reveal that the histograms P(FSCR) and Q(SSCR) in FIG. 2A are unevenly distributed in their respective regions of the likelihood values remote from each other, and it is therefore understood that when the recognition result RCG is true, the statistical feature of the first score FSCR and the statistical feature of the second score SSCR appear with noticeable differences.

Also, it is revealed that the histograms P(FSCR)" and Q(SSCR)" in FIG. 2B are distributed in regions of nearly equal likelihood values, and when the recognition result RCG is false, the statistical feature of the first score FSCR and the statistical feature of the second score SSCR become almost the same.

As has been described, there is specific statistical features represented by the relation between the histograms P(FSCR) and Q(SSCR) and between the histograms P(FSCR)" and Q(SSCR)" in each case where the recognition result RCG is true or false, and the score evaluation function in Equation (1) above is determined as a function capable of representing such statistical features.

According to the score evaluation function in Equation (1) above, when the recognition result RCG is true, as shown in FIG. 2A, the first score FSCR is unevenly distributed to the likelihood values greater than those of the second score SSCR. Hence, a difference value (FSCR - SSCR) in the right side of Equation (1) above takes a large value, and by further multiplying the difference value (FSCR - SSCR) by the first score FSCR, it is possible to obtain a score evaluation value capable of making the feature of the difference value (FSCR - SSCR) obvious.

Hence, by applying the first score FSCR and the second score SSCR outputted upon correct speech recognition, the score evaluation function in Equation (1) above can reflect the statistical feature when speech recognition is performed correctly, and further, it can be used as the basis when the recognition result RCG outputted upon correct speech recognition is judged as being true.

On the other hand, when speech recognition is performed incorrectly, as shown in FIG. 2B, the likelihood values of the first score FSCR and the second score SSCR are distributed in substantially the same regions. Hence, the difference value (FSCR - SSCR) in the right side of Equation (1) above takes a small value, and by further multiplying the difference value (FSCR - SSCR) by the first score FSCR, it is possible to obtain a score evaluation value capable of making the feature of the difference value (FSCR - SSCR) obvious.

Hence, by applying the first score FSCR and the second score SSCR outputted upon incorrect speech recognition, the score evaluation function in Equation (1) above can reflect the statistical feature when speech recognition is performed incorrectly, and further, it can be used as the basis when the recognition result RCG outputted upon incorrect speech recognition is judged as being false.

The threshold value THD is determined as a judgment reference used to judge a correct recognition RCG as being true and an incorrect recognition RCG as being false for the score evaluation value G(L) found from the score evaluation function in Equation (1) above.

To be more specific, it is generally difficult to make a true/false judgment on all the recognition results RCG. According to speaker adaptation, if an incorrect recognition result RCG is judged as being true erroneously, an acoustic model is erroneously adapted as described above, which deteriorates the recognition performance. Conversely, if a correct recognition result RCG is judged as being false erroneously, speaker adaptation is not performed, which neither improves nor deteriorates the recognition performance. Hence, in order to ensure the performance which makes an accurate true/false judgment, the threshold THD is selected based on the principle as follows.

Initially, the score evaluation value G (L) of each of the words and sentences is calculated by applying the first score FSCR and the second score SSCR, which are obtained from each word or sentence upon correct speech recognition, to the score evaluation function in Equation (1) above. Further, a histogram R(G(L)) showing the distribution of words and sentences in number corresponding to the respective score evaluation values G(L) thus calculated is obtained.

Likewise, the score evaluation value G(L) of each of the words and sentences is calculated by applying the first score FSCR and the second score SSCR, which are obtained from each word or sentence upon incorrect speech recognition, to the score evaluation function in Equation (1) above. Further, a histogram T(G(L)) showing the distribution of words and sentences in number corresponding to the respective score evaluation values G (L) thus calculated is obtained.

The histograms R(G(L)) and T(G(L)) thus obtained show the distribution indicated by a solid line in FIG. 2C and the distribution indicated by a dotted line in FIG. 2C, respectively.

To be more specific, the histogram R(G(L)) shows the feature upon correct speech recognition of utterances for a given word or sentence, and the histogram T (G (L) ) shows the feature upon incorrect speech recognition of utterances for a given word or sentence.

Given the score evaluation value G(L) at which the number in the histogram T(G(L)) shows 0 as the boundary, then a region WR where the value of the score evaluation value G(L) is greater than 0 indicates a region where a correct recognition result RCG can be judged as being true. Also, given the score evaluation value G(L) at which the number in the histogram T(G(L)) shows 0 as the boundary, then a region WT where the value of the score evaluation value G(L) is less than 0 is a region where an incorrect recognition result RCG can be judged as being false.

For this reason, the threshold value THD is determined to be a value slightly greater than the score evaluation value G(L) at which the number of the histogram T(G(L)) is 0.

Subsequently, the true/false judging section 6 compares the threshold value THD with the score evaluation value G(L) obtained from the score evaluation function in Equation (1) above each time a recognition result RCG for a word or a sentence is outputted, then judges whether the threshold value THD and the score evaluation value G(L) are in a specific relation, and outputs a judgment result RSLT. To be more specific, when the score evaluation value G(L) is greater than the threshold value THD (G(L) > THD), the true/false judging section 6 judges the recognition result RCG as being true, and judges the recognition result RCG as being false when the score evaluation value G(L) is equal to or less than the threshold value THD (G(L) ≤ THD), after which the true/false judging section 6 outputs a judging result RSLT indicating true or false.

The speaker adaptation processing section 7 receives both the recognition result RCG and the judging result RSLT, and performs speaker adaptation processing according to the judging result RSLT.

In other words, upon input of the judging result RSLT indicating that speech recognition has been performed correctly, the speaker adaptation processing section 7 performs speaker adaptation based on the feature vector sequence V(n) of utterances made in this instance, whereas upon input of the judging result RSLT indicating that speech recognition has been performed incorrectly, it does not perform speaker adaptation.

It should be noted that the speaker adaptation discussed above is applied to all or part of the phoneme models HMMsb prior to speaker adaptation.

To be more specific, upon input of the judging result RSLT indicating that speech recognition has been performed correctly, the speaker adaptation processing section 7 assumes the content of utterances of the feature vector sequence V(n) of the utterances as the recognition result RCG, and obtains a speaker adapted phoneme model HMMsb" by applying speaker adaptation to the phoneme model HMMsb prior to speaker adaptation through a speaker adaptation method, such as MLLR and MAP estimation, which is feasible under the condition that the content of utterances is known. Then, the speaker adaptation processing section 7 supplies the phoneme model HMMsb" to the acoustic model storing section 5, in which the acoustic model HMMsb prior to speaker adaptation is updated to the phoneme model HMMsb" and newly stored.

It goes without saying that the processing of speaker adaptation is performed continuously or repetitively. More specifically, the processing is repeated in such a manner that the speaker adapted phoneme model which is updated and newly stored in the acoustic model storing section 5 becomes the phoneme model prior to speaker adaptation in the next speaker adaptation, and is updated to the phoneme model obtained in the next speaker adaptation and newly stored in the acoustic model storing section 5, after which speaker adaptation is further applied to the updated phoneme model in the speaker adaptation after the next.

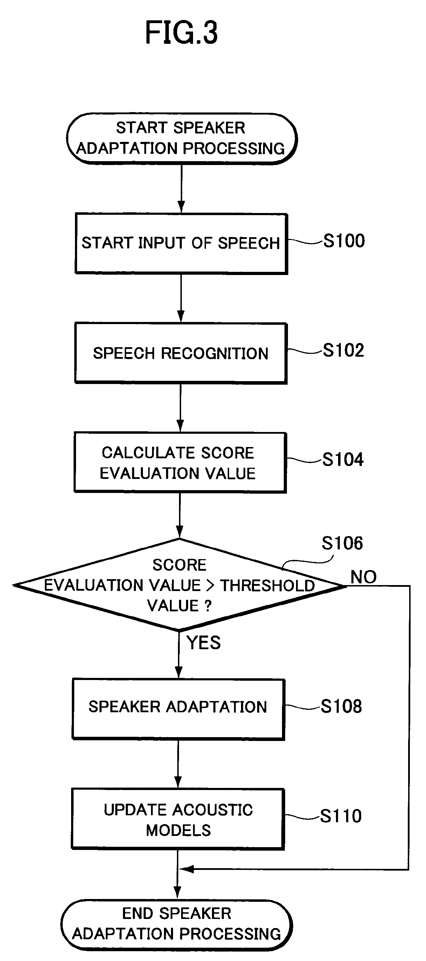

An operation of the speech recognition apparatus of this embodiment configured as above will now be explained with reference to the flowchart of FIG. 3.

Referring to FIG. 3, when the speaker adaptation processing is started, the speech input processing is started in Step S100.

Then, in Step S102, speech recognition is performed as the word dictionary 4, the word model generating section 3, and the speech recognition processing section 2 compare the feature vector sequence V(n) of utterances against the word models HMMw, and the recognition result RCG, the first score FSCR, and the second score SSCR are thereby outputted.

Then, in Step S104, the true/false judging section 6 applies the first score FSCR and the second score SSCR to the score evaluation function in Equation (1) above, and thereby calculates the score evaluation value G(L).

Then, in Step S106, the true/false judging section 6 compares the score evaluation value G(L) with the threshold value THD. When G(L) > THD (in the case of YES), the true/false judging section 6 judges the recognition result RCG as being true, and the flow thereby proceeds to Step S108; when G(L) ≤ THD (in the case of NO), it judges the recognition result RCG as being false and the processing is thereby terminated without the execution of speaker adaptation.

When the flow proceeds to Step S108, the speaker adaptation processing section 7 applies speaker adaptation to the phoneme model HMMsb stored in the acoustic model storing section 5 based on the feature vector sequence V(n), and further, in Step S110, it updates the phoneme model HMMsb to the speaker adapted phoneme model HMMsb" to be newly stored, after which the processing is terminated.

FIG. 3 shows the speaker adaptation processing for a single word or sentence uttered from the speaker for ease of explanation, and it-should be appreciated that the processing of FIG. 3 is repeated in the case of applying speaker adaptation to a continuous passage composed of more than one word or sentence.

The words and sentences uttered from the speaker are processed successively, and a negative judgment, that is, "NO," is made in Step S106 for the phoneme models HMMsb obtained from words and sentences recognized incorrectly, and the flow thereby skips the speaker adaptation processing (Steps S108 and S110). For the phoneme models HMMsb obtained from words and sentences recognized correctly, a positive judgment, that is, "YES," is made in Step S106, and adequate speaker adaptation is performed through the speaker adaptation processing (Steps S108 and S110).

As has been described, according to the speech recognition apparatus of this embodiment, by merely comparing the predetermined threshold value THD with the score evaluation value G(L), which is obtained by applying two scores including the first score FSCR and the second score SSCR to the score evaluation function, it is possible to judge whether the recognition result RCG is true or false speedily in a reliable manner. In other words, not only can a volume of processing needed for a true/false judgment on the speech recognition result be reduced drastically, but also judgment accuracy can be improved.

Accordingly, speaker adaptation can be performed speedily and accurately without making the speaker feel stressed. Further, because execution of incorrect speaker adaptation can be reduced significantly, there can be achieved an advantage of being able to forestall a problem that speech recognition accuracy after speaker adaptation is deteriorated.

The phoneme models HMMsb stored in the acoustic model storing section 5 are more adequately adapted to the speaker steadily each time the user, that is, the speaker, uses the speech recognition apparatus of this embodiment, and therefore, the speech recognition accuracy can be improved with the frequency of use.

In this embodiment, the score evaluation value G (L) is computed based on the first score FSCR and the second score SSCR by finding a difference between the first score FSCR and the second score SSCR and then multiplying the difference value by the first score FSCR as expressed in Equation (1) above. It should be appreciated, however, that the invention is not limited to this description. As a modification, the difference value between the first score FSCR and the second score SSCR may be used as the score value G(L).

(Second Embodiment)

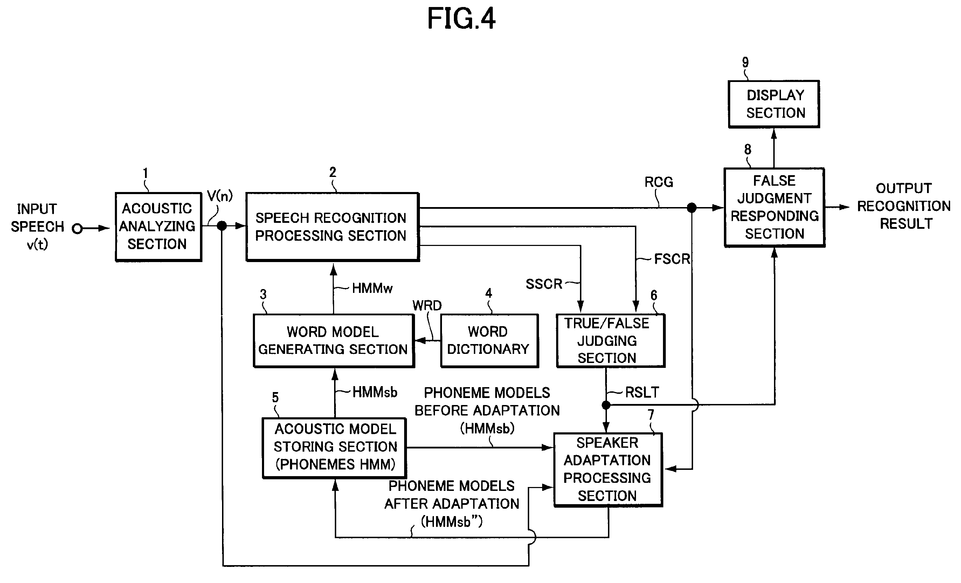

A second embodiment of the invention will now be explained with reference to FIG. 4. In the drawing, like components are labeled with like reference numerals with respect to FIG. 1.

When compared with the speech recognition apparatus of the first embodiment shown in FIG. 1, the speech recognition apparatus of this embodiment is further characterized in that a false judgment responding section 8 and a display section 9 are additionally included.

The false judgment responding section 8 receives the judgment result RSLT from the true/false judging section 6. Upon input of the judging result RSLT indicting that the recognition result RCG is true, the false judgment responding section 8 outputs the recognition result RCG, and upon input of the judging result RSLT indicating that the recognition result RCG is false, it inhibits an output of the recognition result RCG. This configuration makes it possible to output the recognition result RCG only when speech recognition is performed accurately.

Further, upon input of the judgment result RSLT indicating that the recognition result RCG is false, the false judgment responding section 8 directs the display section 9 composed of a liquid crystal display or the like to display a warning in characters or the like to inform the speaker of incorrect recognition and to request the speaker to repeat utterances.

As has been described, according to the speech recognition apparatus of this embodiment, it is possible to provide the user with information as to whether adequate speaker adaptation is performed or utterances need to be repeated through the use of the judging result RSLT from the true/false judging section 6, which can improve the convenience of the user.

As has been described, according to the speech recognition apparatus and the speech recognition method of the invention, at the time of speaker adaptation processing, a true/false judgment on a recognition result is made by: (1) comparing the acoustic models against the feature vector of utterances, and thereby finding a recognition result specifying the acoustic model-having the maximum likelihood, and the first score showing the value of the maximum likelihood and the second score showing the value of the second highest likelihood; and (2) comparing the evaluation value based on the first score and the second score with the pre-set threshold value. A highly accurate true/false judgment can be thus made with a less volume of processing.

The following description will describe other preferred embodiments of the invention with reference to the accompanying drawings.

(Third Embodiment)

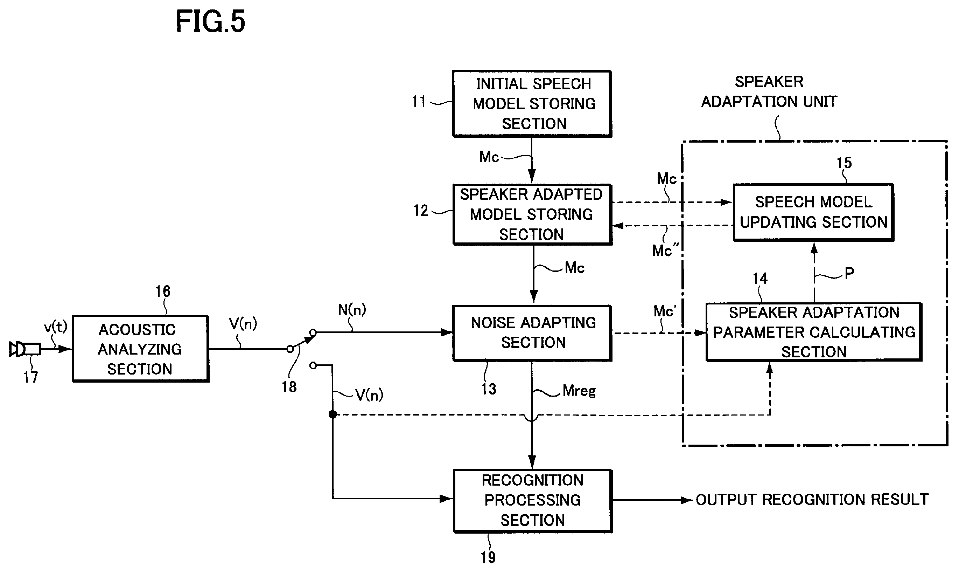

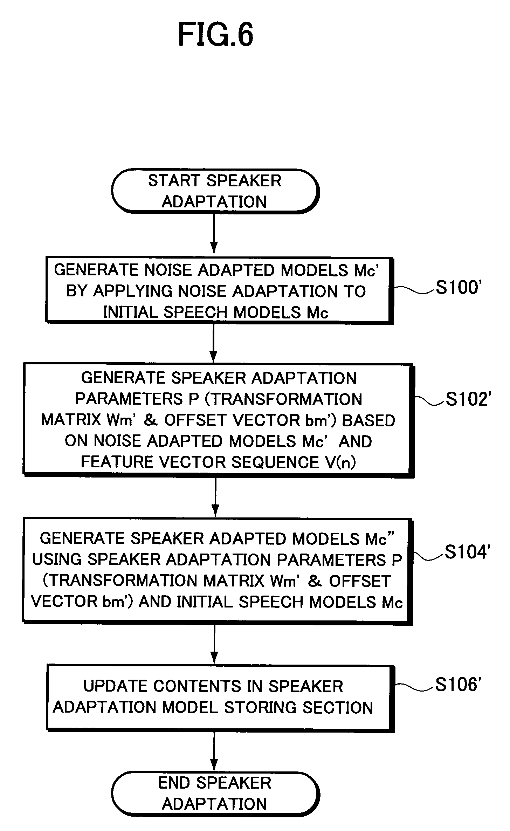

A third embodiment of the invention will now be explained with reference to FIG. 5 and FIG. 6. FIG. 5 is a block diagram showing a configuration of a speech recognition apparatus of this embodiment.

As one of preferred embodiments, an explanation will be given to the example in which speaker adaptation is performed in the initial setting and the initially set acoustic models are used for recognition.

Referring to FIG. 5, the speech recognition apparatus of this embodiment is configured to perform speech recognition using HMM (Hidden Markov Models) , and is composed of an initial acoustic model storing section 11 for storing initial acoustic models Mc, which are acoustic models of an unspecified speaker learned using a speech database pre-recorded in a noiseless environment, a speaker adapted model storing section 12 for newly storing updated speaker adapted models Mc" generated through speaker adaptation computation processing (which will be described below) , a noise adapting section 13, and a speaker adaptation unit having a speaker adaptation parameter calculating section 14 and a acoustic model updating section 15.

The speech recognition apparatus further includes an acoustic analyzing section 16 for generating a feature vector sequence V(n) in a cepstrum region by converting a pick-up signal v(t) picked up at a microphone 17 into a cepstrum coefficient vector for each certain frame period, a changeover switch 18, and a recognition processing section 19.

The drawing schematically shows a signal path by a broken line with an arrowhead and a solid line with an arrowhead. The broken line with an arrowhead indicates a path for a signal when speaker adaptation alone is performed, and the solid line with an arrowhead indicates a path for a signal which flows only when speech recognition is performed, or when speech recognition and speaker adaptation are performed.

Herein, the acoustic analyzing section 16 generates and outputs a feature vector sequence V(n) in a cepstrum region by converting a picked-up signal v(t) on the time axis generated upon sound pick-up at the microphone 17 into a cepstrum coefficient vector for each predetermined frame time. A parenthetic variable n in V(n) represents the frame number.

At the time of speaker adaptation processing described below, the changeover switch 18 is switched to the noise adapting section 13 within a silent period during which the speaker has not started to utter words or sentences yet, and the feature vector sequence V(n) generated in the acoustic analyzing section 16 is thereby sent to the noise adapting section 13.

This switching operation can be achieved by controlling the changeover switch 18 to switch to the noise adapting section 13 in a period of tens of milliseconds or a few seconds immediately after a command to start the processing is given from the speaker or the apparatus by assuming that the speaker utters no words or sentences during this period, and later to switch to the speaker adaptation parameter calculating section 14 or the recognition processing section 19.

Alternatively, the picked-up signal v(t) from the microphone 17 may be monitored from time to time by certain monitor control means (not shown), so that the changeover switch 18 is switched to the noise adapting section 13 upon judgment of the absence of utterances from the speaker in the picked-up signal v(t), and to the speaker adaptation parameter calculating section 14 or the recognition processing section 19 upon judgment of the presence of utterances from the speaker. In short, the changeover switch 18 is switched as described above depending on whether it is a period during which utterances from the speaker are contained in the picked-up signal v(t).

Also, at the time of speaker adaptation processing, when the speaker starts uttering words or sentences, the changeover switch 18 is switched to the speaker adaptation parameter calculating section 14 during the utterance period, and the feature vector sequence V(n) generated in the acoustic analyzing section 16 is thereby sent to the speaker adaptation parameter calculating section 14.

The changeover switch 18 operates in the same manner as above when speech recognition processing is started after the speaker adaptation processing is completed. However, as previously mentioned, the signal does not pass through the path indicated by the broken line with an arrowhead, but passes through the path indicated by the solid line with an arrowhead.

The changeover switch 18 is switched to the noise adapting section 13 in a period before the speaker starts to utter words or sentences, that is, a period during which only background noises are picked up, and the feature vector sequence N (n) of the background noises is thereby outputted to the noise adapting section 13.

At the transition to the utterance period during which utterances are picked up at the microphone 17, the changeover switch 18 is switched to the speaker adaptation parameter calculating section 14 at the time of speaker adaptation processing, and to the recognition processing section 19 at the time of recognition processing, and the feature vector sequence V(n) in the utterance period is outputted to the speaker adaptation parameter calculating section 14 or the recognition processing section 19.

The initial acoustic model storing section 11 is a so-called database composed of a read-only semiconductor memory (ROM), detachable smart media, a compact flash memory, etc., in which are stored initial acoustic models Mc in units of sub-words, such as phonemes, generated through learning of speeches from a standard speaker.

The speaker adapted model storing section 12 is composed of a re-storable, non-destructive semiconductor memory or the like, and at the time of speaker adaptation processing described below, it first stores copies of the initial acoustic models Mc stored in the initial acoustic model storing section 11.

Then, as will be described below, HMM are adapted to the speaker by the speaker adaptation parameter calculating section 14 and the acoustic model updating section 15, and are thereby updated to speaker adapted models Mc". Thus, the initial acoustic models Mc are replaced with (updated to) the speaker adapted models Mc" and newly stored.

The noise adapting section 13 applies, at the time of speaker adaptation processing, noise adaptation to all the initial acoustic models Mc in units of sub-words, such as phonemes, stored in the speaker adapted model storing section 12, and thereby generates noise adapted models Mc' respectively corresponding to all the initial acoustic models Mc, which are sent to the speaker adaptation parameter calculating section 14 through the path indicated by the broken line with an arrowhead in the drawing.

The noise adapting section 13 applies, at the time of speech recognition, noise adaptation to the acoustic models (that is, the speaker adapted models Mc") to be updated and newly stored in the speaker adapted model storing section 12 through the speaker adaptation processing described above, and sends speaker adapted models Mreg adapted to noises to the recognition processing section 19 through the path indicated by the solid line with an arrowhead in the drawing.

In other words, at the time of speaker adaptation processing performed first, when the microphone 17 picks up background noises generated in the utterance environment within a silent period during which the speaker has not started to utter words or sentences yet, the acoustic analyzing section 16 generates the feature vector sequence V(n) for each certain frame period based on the picked-up signal v(t), and further, it sends the feature vector sequence V (n) thus generated as the feature vector sequence N(n) of the background noises to the noise adapting section 13 as the changeover switch 18 is switched to the noise adaptation section 13.

The noise adapting section 13 generates noise adapted models Mc' from all the initial acoustic models Mc using the background noise feature vector sequence N(n) through the use of noise adapting processing, such as the HMM synthesis method and the Jacobian adaptation method, and sends the noise adapted models Mc' to the speaker adaptation parameter calculating section 14.

At the time of speech recognition processing performed next, the microphone 17 picks up background noises generated in the utterance environment within the silent period during which the speaker has not started to utter words or sentences yet, and the acoustic analyzing section 16 generates the feature vector sequence V(n) for each certain frame period based on the picked-up signal v(t), and sends the feature vector sequence V(n) thus generated as the background noise feature vector sequence N(n) to the noise adapting section 13 as the changeover switch 18 is switched to the noise adapting section 13.

The noise adapting section 13 applies noise adaptation to the acoustic models (that is, the speaker adapted models Mc") to be updated and newly stored, using the background noise feature vector sequence N(n), and sends the speaker adapted models Mreg adapted to noises to the recognition processing section 19.

An explanation will now be given to a case where the noise adapting section 13 applies noise adaptation to a mean vector $\mu c$ of the respective distributions of the speaker adapted models Mc" which significantly influence the speech recognition accuracy, using the HMM synthesis method at the time of speaker adaptation.

Initially, the noise adapting section 13 finds background noise models Nb from the feature vector sequence N(n) of the background noises.

For ease of explanation, an explanation will be given on the assumption that background noises are normal, the background noise models Nb are 1 mixture/state models, and $\mu N$ is given as the mean vector of the background noise models Nb. Then, the mean vector $\mu N$ is found by averaging the feature vector sequence N(n) of the background noises with the number of frames.

Further, the mean vector $\mu cm$ of the distribution m of the initial acoustic models Mc and the mean vector $\mu N$ of the background noise models Nb are synthesized, and a mean vector $\mu cm'$ of the synthesized noise adapted distribution m is thereby found, which is expressed by Equation (2) as follows.

(Equation (2))

$$\mu cm'=IDCT[log[(exp[DCT[\mu cm]]+K\cdot exp[DCT[\mu N]])] \tag{2}$$

where IDCT [] is inverse discrete cosine transformation, log [] is logarithmic transformation, exp [] is exponential transformation, DCT [] is discrete cosine transformation, and k is a mixing ratio found from an S/N ratio.

The mean vector $\mu cm'$ is found for all the distributions of the initial acoustic models Mc. Noise adapted models Mc', which are initial acoustic models Mc superimposed with background noises in the utterance environment at the time of speaker adaptation, are thus found and sent to the speaker adaptation parameter calculating section 14.

Herein, 1 mixture/state models are used as the noise models Nb, and it should be appreciated that in the case of 2 or more mixture in 2 or more states, more than one distribution of the noise adapted models Mc' is found for a single distribution of the corresponding initial acoustic models Mc. It is also possible to find the noise adapted models Mc' when covariance transformation is concerned.

The case of using the HMM synthesis method as the noise adaptation method was explained. However, the invention can also use the Jacobian adaptation method, and other noise adaptation method to find noise adapted models Mc', which are the initial acoustic models Mc superimposed with the background noises at the time of utterances.

The speaker adaptation parameter calculating section 14 receives, at the time of speaker adaptation processing, the noise adapted models Mc' from the noise adapting section 13, and the feature vector sequence V(n) of utterances supplied from the acoustic analyzing section 16 through the changeover switch 18, and generates and outputs speaker adaptation parameters P having the feature of the utterances.

To be more specific, for example, when the speaker starts to utter words or sentences at the time of speaker adaptation processing, the changeover switch 18 is switched to the speaker adaptation parameter calculating section 14 during the utterance period, and the feature vector sequence V(n) of the utterances to which background noises are superimposed is thereby supplied from the acoustic analyzing section 16 to the speaker adaptation parameter calculating section 14 through the changeover switch 18.

Upon supply of the feature vector sequence V(n) of a speech to which background noises are superimposed (background noise superimposed speech), and the noise adapted models Mc' to which the same background noises are adapted, the speaker adaptation parameter calculating section 14 performs speaker adaptation computation processing using the feature vector sequence V(n) and the noise adapted models Mc', and thereby generates the speaker adaptation parameters P used to adapt the noise adapted models Mc' to the speaker.

Herein, an explanation will be given to a case where the mean vector of the respective distributions of the speaker adapted models Mc" that significantly influence the recognition accuracy is updated using MLLR (Maximum Likelihood Linear Regression) as the speaker adaptation computation processing.

MLLR processing is performed using the feature vector sequence V(n) of utterances of which the content is known and the noise adapted models Mc', and a transformation matrix Wm' and an offset vector bm' are found as the speaker adaptation parameters P used to adapt the mean vector $\mu cm'$ of the distribution m of the noise adapted models Mc' to the speaker.

The transformation matrix Wm' and the offset vector bm' are shared by a plurality of distributions, and for this reason, the transformation matrix Wm' and the offset vector bm' of the same values are used in some distributions.

Also, selection of the distributions sharing the transformation matrix Wm' and the offset vector bm' is calculated in advance based on the distributions prior to noise adaptation by clustering all the mean vectors.

Also, in the case of sharing the transformation matrix Wm' and the offset vector bm' with all the distributions, one type of transformation matrix Wm' and one type of offset vector bm' common to all the distributions are found.

In a case where the noise models Nb used in the noise adapting section 13 are not 1 mixture/state models, a plurality of distributions of the noise adapted models Mc' correspond to a single distribution of the initial acoustic models Mc. In this case, all the noise adapted models Mc' corresponding to a single distribution of the initial acoustic models Mc share the transformation matrix Wm' and the offset vector bm'.

In MLLR, calculations are generally made using utterance data for more than one utterance. Herein, common information among the distributions of the speaker adaptation parameters P is used commonly in each utterance, and the acoustic models corresponding to the utterance data are calculated using the noise adapted models Mc' to which noises are adapted for each utterance.

As has been described, in the case of using MLLR as the speaker adaptation method, the speaker adaptation parameter calculating section 14 finds the transformation matrix Wm' and the offset vector bm' as the speaker adaptation parameters P used to update the mean vectors of the respective distributions of the noise adapted models Mc', using the feature vector sequence V(n) of utterances of which the content is known.

The above description described a case where the transformation matrix Wm' and the offset vector bm' are calculated through MLLR; however, MAP (Maximum A Posteriori) estimation can be used as well.

In order to find the parameters P used to adapt the mean vector μcm' to the speaker through MAP estimation, the mean vector of the noise adapted models Mc' is adapted to the speaker through MAP estimation, after which the speaker adaptation parameter calculating section 14 converts the mean vector to the intended speaker adaptation parameters P.

According to MAP estimation, the Viterbi matching or the like is used to calculate the correspondence between the feature vector of each frame in the feature vector sequence V(n) of the utterances of which the content is known and the respective distributions of the noise adapted models Mc'.

The feature vectors of the frames corresponding to the distribution m of the noise adapted models Mc' are collected, and the mean feature vector Vm~ is found by averaging the collected feature vectors by the number of frames.

Given nm as the number of frames (counts) of the feature vector of the frame corresponding to the distribution m, and τm' as the weighting factor of the distribution m, and μcm'^ as the updated mean vector, which is the mean vector μcm' of the distribution m adapted to the speaker, then the updated mean vector μcm'^ is calculated in accordance with the relation expressed by Equation (3) as follows.

(Equation (3))

$$\mu cm'^\wedge = (\tau m' \cdot \mu cm' + nm \cdot Vm^{\sim})/(\tau m' + nm) \tag{3}$$

Also, the weighting factor τm' is updated for each utterance in accordance with the relation expressed by Equation (4) as follows.

(Equation (4))

$$\tau m'^\wedge = \tau m' + nm \tag{4}$$

Subsequently, by replacing the mean vector μcm' with the updated mean vector μcm'^, and the weighting factor τm' with τm'^, the mean vector μcm' and the weighting factor τm' are updated successively for each utterance to the updated mean vector μcm'^ and the weighting factor τm'^, respectively.

Assume that the speaker adaptation parameters P are a difference vector between the models before and after speaker adaptation, then a difference vector dm', which is the speaker adaptation parameter P of the distribution m, is expressed by Equation (5) as follows.

(Equation (5))

$$dm' = \mu cm'^\wedge - \mu cm' = nm \cdot (Vm^{\sim} - \mu cm') / (\tau m' + nm) \tag{5}$$

From Equation (5) above, the difference vector dm' can be found without calculating the updated mean vector μcm'^.

The difference vector dm' is transferred to the acoustic model updating section 15 described below, while the weighting factor τm' is updated in accordance with Equation (4) above and held in the speaker adaptation parameter calculating section 14. An arbitrary value can be given to the initial value of the weighing factor τm'.

When the noise adapted models Mc' used in the noise adapting section 13 are not 1 mixture/state models, a plurality of distributions of the noise adapted models Mc' correspond to a single distribution of the initial acoustic models Mc.

For example, assume that the distribution m of the initial acoustic models Mc corresponds to the distributions m1 and m2, ⋯, and mk of the noise adapted models Mc'. Then, given dm1' as the speaker adaptation parameter found in accordance with Equation (5) above which corresponds to the distribution m1 of the noise adapted models Mc', and τm'1 as the weighting factor, then the difference vector parameter dm' used to update the distribution m of the initial acoustic models Mc is found through averaging in accordance with Equation (6) as follows.

(Equation (6))

$$dm' = (dm1' + dm2' + \dots + dmk')/k \tag{6}$$

Alternatively, the speaker adaptation parameter dm' may be calculated by integrating k parameters through computation expressed by Equation (7) below, which is Equation (6) weighted with the weighting factor τm1'.

(Equation (7))

$$dm' = (\tau m1' \cdot dm1' + \tau m2' \cdot dm2' + ..... + \tau mk' \cdot dmk') / (\tau m1' + \tau m2' + ..... + \tau mk') \ (7) \qquad\qquad (7)$$

The above description described the operation of the speaker adaptation parameter calculating section 14 in the cases of using respectively MLLR and MAP estimation as the speaker adaptation method.

Other methods can be used as the speaker adaptation method.

In the case of using the speaker adaptation method to find the speaker adaptation parameters P, like the transformation matrix Wm' and the offset vector bm' in MLLR, through the speaker adaptation processing, by using these parameters P, and in a case where the speaker adaptation parameters cannot be used directly like in MAP estimation, by presuming speaker and noise adapted models, which are the noise adapted models Mc' adapted to the speaker, and using a difference between the noise adaptation models Mc' and the speaker and noise adapted models as the speaker adaptation parameter P, it is possible to use various speaker adaptation methods.

The above description described the case of applying the mean vector. It should be appreciated, however, that the invention can be used in the case of applying the covariance matrix.

In many speaker adaptation methods, it is necessary to know the contents of utterances (the meaning of words and sentences uttered). In this case, speaker adaptation processing alone is performed prior to speech recognition processing. In this instance, the content of utterances is determined in advance and the determined content is presented to the speaker, so that the speaker utters words and sentences according to the content being presented.

Speaker adaptation is performed for adaptation of the speaker-independent characteristics and for adaptation of the utterance environment.

In a case where speaker adaptation is applied to the initial acoustic models Mc, which are acoustic models of an unspecified speaker learned using the speech database recorded in a noiseless environment, there is no influence from the background noises, and therefore, adaptation of the speaker-independent characteristics alone is performed.

However, in a case where the aforementioned initial acoustic models Mc are adapted to the speaker using utterances uttered for speaker adaptation in the environment in the presence of background noises, adaptation of the speaker-independent characteristics and adaptation of the background noises at the time of utterances for adaptation are performed simultaneously.

For this reason, when speech recognition is performed using the speaker adapted models adapted to the speaker, high recognition accuracy can be generally achieved provided that the utterance environment at the time of the speech recognition is the same as the noise environment at the time of utterances for adaptation. However, when recognition is performed in the utterance environment different from the environment at the time of utterances for adaptation, there is a possibility that high recognition accuracy cannot be necessarily achieved.

In the invention, in order to solve the above problem, the noise adaptation is performed in the noise adapting section 13 as described above before speaker adaptation processing is performed, so that the noise adapted models Mc' are generated as the initial acoustic models Mc adapted to the same background noise environment as that in the utterance environment at the time of adaptation, and the speaker adaptation parameters P are calculated by performing speaker adaptation processing in the speaker adaptation parameter calculating section 14 using the noise adapted models Mc'.

Because the noise adapted models Mc' are already adapted to the same background noises as those in the utterance environment for adaptation before the speaker adaptation processing is performed, the speaker adaptation parameters P found through the speaker adaptation processing are less influenced by the adapted terms of the background noises, and thereby includes a larger number of adapted terms of the speaker-independent characteristics, to which speaker adaptation is originally addressed.

The acoustic model updating section 15 described below updates the initial acoustic models Mc using the speaker adaptation parameters P thus found, and thereby generates speaker adapted models Mc'' less influenced by background noises at the time of utterances for adaptation.

The acoustic model updating section 15 converts the initial acoustic models Mc stored in the speaker adapted model storing section 12 into the speaker adapted models Mc'' using the speaker adaptation parameters P outputted from the speaker adaptation parameter calculating section 14.

The function of the acoustic model updating section 15 will now be explained in cases where the mean vector μcm of the distribution m of the initial acoustic models Mc is updated by adopting MLLR and MAP estimation described above, respectively.

As has been described, in the case of using MLLR as the speaker adaptation processing and using the transformation matrix Wm' and the offset vector bm' as the speaker adaptation parameters P in the speaker adaptation parameter calculating section 14, the mean vector $\mu$cm" of the distribution m of the speaker adapted models Mc" updated through speaker adaptation are found from the relation expressed by Equation (8) as follows.

$$\text{(Equation (8))}$$

$$\mu cm" = Wm' \cdot \mu cm + bm' \qquad (8)$$

In the case of using MAP estimation as the speaker adaptation processing and using the difference vector dm' as the speaker adaptation parameters P in the speaker adaptation parameter calculating section 14, the mean vector $\mu$cm" is found from the relation expressed by Equation (9) as follows.

$$\text{(Equation (9))}$$

$$\mu cm" = \mu cm + dm' \qquad (9)$$

In either case, the mean vector $\mu$cm" is found as the mean vector less influenced by the background noises at the time of utterances for adaptation and adapted to the speaker-independent characteristics.

Subsequently, the acoustic model updating section 15 updates the acoustic models Mc stored in the speaker adapted model storing section 12 using the speaker adaptation parameters P outputted from the speaker adaptation parameter calculating section 14, and newly stores the updated speaker adapted models Mc" into the speaker adapted model storing section 12. In short, at the time of speech recognition, the initial acoustic models Mc are updated to the speaker adapted models Mc" and newly stored to be used as the initial acoustic models Mc.

The recognition processing section 19 is provided to perform speech recognition processing. In other words, at the time of speech recognition, the noise adapting section 13 generates speaker adapted models Mreg adapted to noises by applying noise adaptation to the updated speaker adapted models Mc (that is, speaker adapted models Mc") newly stored in the speaker adapted model storing section 12, based on the feature vector sequence N(n) of the background noises in the noise environment of utterances for recognition, and supplies the speaker adapted models Mreg to the recognition processing section 19.

-The recognition processing section 19 compares the sequences formed by the speaker adapted models Mreg adapted to noises against the feature vector sequence V(n) of utterances to be recognized which is supplied from the acoustic analyzing section 16 as well as the models of recognition candidate words and sentences, and outputs the sequence formed by the speaker adapted model Mreg having the maximum likelihood as the recognition result.

The speaker adapted models Mreg adapted to noises for the use of speech recognition thus become the models to which both the speaker-independent characteristics and the background noises at the time of utterances for recognition are adapted.

Hence, even when the background noise environment at the time of speech recognition and the background noise environment at the time of utterances for adaptation are different, it is still possible to achieve a high recognition performance at the time of speech recognition.

The operation of the speech recognition apparatus of this embodiment will now be explained with reference to the flowchart of FIG. 6. FIG. 6 shows an operation at the time of speaker adaptation.

Referring to FIG. 6, when the speaker adaptation processing is started, the noise adapted models Mc' are generated first in Step S100' by copying the initial acoustic models Mc stored in the initial acoustic model storing section 11 to the speaker adapted model storing section 12, and then applying noise adaptation to the copied initial acoustic models Mc in the noise adapting section 13.

To be more specific, the feature vector sequence N(n) of the background noises picked up during the silent period at the time of speaker adaptation is supplied to the noise adapting section 13 from the acoustic analyzing section 16. Then, the noise adapted models Mc' are generated by applying noise adaptation to the initial acoustic models Mc based on the feature vector sequence N(n) in the noise adapting section 13, and sent to the speaker adaptation parameter calculating section 14.

Then, in Step S102', the changeover switch 18 is switched to the speaker adaptation parameter calculating section 14 when the speaker starts to utter words or sentences, and the feature vector sequence V(n) of the utterances to which background noises are superimposed (background noise superimposed speech) is supplied to the speaker adaptation parameter calculating section 14 from the acoustic analyzing section 16 during the utterance period.

The speaker adaptation parameter calculating section 14 generates the speaker adaptation parameters P based on the feature vector sequence V(n) and the noise adapted models Mc' thus received.

In other words, in the cases of finding the speaker adaptation parameters P through MLLR and MAP estimation described above, the transformation matrix Wm' and the offset vector bm', and the difference vector dm' are generated respectively as the speaker adaptation parameters P.

Then, in Step S104', the acoustic model updating section 15 finds the speaker adapted models Mc" by performing model updating computation using the initial acoustic models Mc stored in the speaker adapted model storing section 12 and the speaker adaptation parameters P.

Then, in Step S106', the acoustic model updating section 15 replaces the initial acoustic models Mc stored in the speaker adapted model storing section 12 with the speaker adapted models Mc" to be updated and newly stored, after which the speaker adaptation processing is terminated.

When the recognition processing section 19 performs speech recognition after the speaker adaptation processing, the speaker adapted models Mc" stored in the speaker adapted model storing section 12 are used as the updated initial acoustic models Mc, and the noise adapting section 13 applies noise adaptation to the updated initial acoustic models Mc (in other words, the speaker adapted models Mc") and thereby generates the speaker adapted models Mreg adapted to noises, which are supplied to the speech recognition section 19. Further, the speech recognition section 19 compares the sequences formed by the speaker adapted models Mreg against the feature vector sequence V(n) of the utterances from the speaker which is supplied from the acoustic analyzing section 16. The speech recognition section 19 then outputs the speaker adaptation sequence formed by the speaker adapted model Mreg having the maximum likelihood as the recognition result.

As has been described, according to the speech recognition apparatus of this embodiment, the noise adaptation processing is performed prior to the speaker adaptation processing, which makes it possible to reduce the adverse effects of the background noises at the time of the speaker adaptation on the speaker adaptation parameters found for the use in the speaker adaptation processing.

Because the speaker adapted models Mc" are generated using the speaker adaptation parameters from which the adverse effects of the background noises are reduced, it is possible to generate the speaker adapted models Mc" highly effective for adapting the speaker, to which speaker adaptation is originally addressed.

Further, at the time of speech recognition, noise adaptation is applied to the updated and newly stored speaker adapted models Mc" using the background noises at the time of utterances for recognition.

Recognition can be the refore performed using the models adapted to both the speaker-independent characteristics and the background noises at the time of utterances, which makes it possible to achieve a high recognition performance.

(Forth Embodiment)

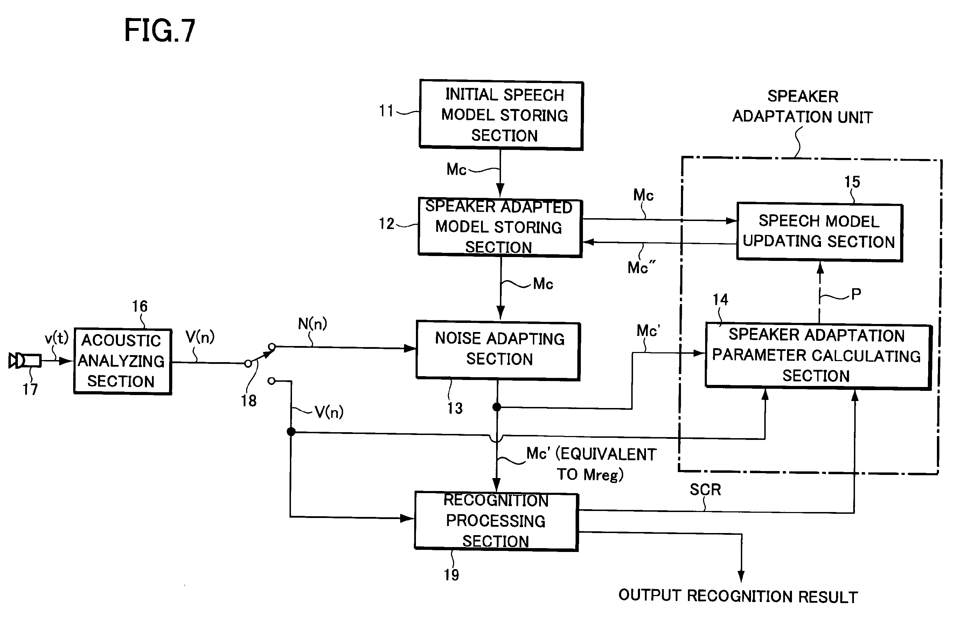

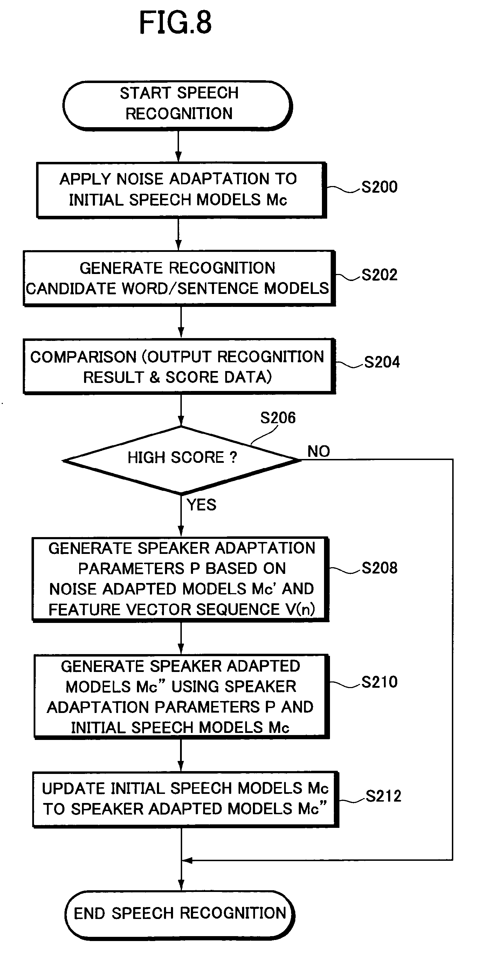

A fourth embodiment of the invention will now be explained with reference to FIG. 7 and FIG. 8. FIG. 7 is a view showing a configuration of a speech recognition apparatus of this embodiment, and like components are labeled with like reference numerals with respect to FIG. 5. In this embodiment, speaker adaptation is performed while speech recognition is performed. For this reason, all the signal paths of FIG. 7 are indicated by a solid line with an arrowhead.

Referring to FIG. 7, a difference between the speech recognition apparatus of this embodiment and the speech recognition apparatus of the third embodiment will be summarized as follows. That is, the speech recognition apparatus of the third embodiment performs speech recognition after speaker adaptation is performed, whereas the speech recognition apparatus of this embodiment performs speaker adaptation at the same time when speech recognition is performed.

Further, the noise adapted models Mc' outputted from the noise adapting section 13 are sent not only to the speaker adaptation parameter calculating section 14 to be adapted to the speaker, but also to the recognition processing section 19 as the speaker adapted models Mreg adapted to noises as shown in FIG. 7 when the contents of the speaker adapted model storing section 12 are updated to the speaker adapted models Mc".

Hence, although the noise adapted models Mc' of FIG. 7 are outputted from the noise adapting section 13 to both the speaker adaptation parameter calculating section 14 and the recognition processing section 19, they are outputted to the speaker adaptation parameter calculating section 14 as the noise adapted models Mc' to be used for speaker adaptation processing, whereas they are outputted to the recognition processing section 19 as the speaker adapted models Mreg adapted to noises to be used for speech recognition.

The recognition processing section 19 compares the sequences formed in the noise adapting section 13 from the noise adapted models Mc' (that is, the speaker adapted models Mreg adapted to noises) using the aforementioned speaker adapted models Mc" as the initial acoustic models Mc against the feature vector sequence V(n) of the utterances to be recognized, and outputs the sequence formed by the speaker adapted model Mreg having the maximum likelihood as the recognition result. Further, the recognition processing section 19 generates score data SCR indicating the similarity between the recognition result and the utterances from the likelihood, and outputs the score data SCR together with the recognition result.

In other words, when the likelihood is high as the result of the above comparison, the recognition processing section 19 outputs the sore data SCR indicating that the speech recognition result is highly reliable together with the recognition result described above, and when the likelihood is not sufficiently high, it outputs the score data SCR indicating that the speech recognition result is less reliable together with the recognition result described above. The output in either case is supplied to the speaker adaptation parameter calculating section 14.

Then, upon supply of the score data SCR indicating that the speech recognition result is highly reliable and the recognition result described above, the speaker adaptation parameter calculating section 14 judges that the utterances are recognized correctly, and generates the speaker adaptation parameters P used for speaker adaptation based on the feature vector sequence V(n) of the utterances subjected to speech recognition and the noise adapted models Mc' from the noise adapting section 13.

Further, the acoustic model updating section 15 generates the speaker adapted models Mc" using the speaker adaptation parameters P and the initial acoustic models Mc stored in the speaker adapted model storing section 12, and supplies the speaker adapted models Mc" thus generated to the speaker adapted model storing section 12, so that the initial acoustic models Mc are updated to the speaker adapted models Mc" and newly stored therein.

Hence, according to the speech recognition apparatus of this embodiment, while the speech recognition processing is performed repetitively, the initial acoustic models Mc stored in the speaker adapted model storing section 12 are adapted to the speaker-independent characteristics steadily at a higher degree.

The operation of the speech recognition apparatus of this embodiment will now be explained with reference to the flowchart of FIG. 8.

Referring to FIG. 8, when the speech recognition processing is started, the noise adapting section 13 first generates the noise adapted models Mc' in Step S200 by applying noise adaptation to the initial acoustic models Mc stored in the speaker adapted model storing section 12.

To be more specific, the feature vector sequence N(n) of the background noises picked up during the silent period before the speaker starts to utter words or sentences is supplied to the noise adapting section 13 from the acoustic analyzing section 16, and the noise adapting section 13 generates the noise adapted models Mc' by applying noise adaptation to the initial acoustic models Mc based on the feature vector sequence N (n) of the background noises.

Then, in Step S202, the changeover switch 18 is switched to the recognition processing section 19 when the speaker starts to utter words or sentences, and the feature vector sequence V(n) of the utterances uttered during the utterance period is thereby supplied to the recognition processing section 19 from the acoustic analyzing section 16.

The recognition processing section 19 then generates recognition candidate word models or recognition candidate sentence models using the noise adapted models Mc' generated in the noise adapting section 13.

Further, in subsequent Step S204, the recognition processing section 19 performs speech recognition by comparing the recognition candidate word models or the recognition candidate sentence models against the feature vector sequence V(n) , and outputs the recognition result and the score data SCR.

Then, in Step S206, the speaker adaptation parameter calculating section 14 judges whether the score data SCR marks a high score, and when it does not mark a high score (in the case of NO), the processing is terminated based on the judgment that the reliability of the recognition result is low; the flow proceeds to Step S208 when the score data SCR marks a high score (in the case of YES).

In Step S208, the speaker adaptation parameter calculating section 14 generates the speaker adaptation parameters P for speaker adaptation based on the feature vector sequence V(n) of the utterances currently subjected to recognition, the noise adapted models Mc', and the recognition result.

Then, in Step S210, the acoustic model updating section 15 performs speaker adaptation processing using the initial acoustic models Mc stored in the speaker adapted model storing section 12 and the speaker adaptation parameters P, and thereby finds the speaker adapted models Mc".

Further, in Step S212, the acoustic model updating section 15 supplies the speaker adapted models Mc" thus generated to the speaker adapted model storing section 12, so that the acoustic models Mc are replaced with the speaker adapted models Mc" so as to be updated and newly stored therein, after which the processing is terminated.

As has been described, according to the speech recognition apparatus of this embodiment, speech recognition and speaker adaptation are performed synchronously, and the speaker adapted models Mc", to which the speaker-independent characteristics are adapted at a higher degree, are generated, and stored into the speaker adapted model storing section 12 as updated models.

For this reason, as a number of different words and sentences are uttered and the recognition processing section 19 performs speech recognition for the utterances accumulatively, the initial acoustic models Mc stored in the speaker adapted model storing section 12 are updated to the speaker adapted models Mc" to which the speaker-independent characteristics are adapted at a higher degree, which makes it possible to improve the speech recognition performance.

Also, because the speaker adapted models Mc" are generated to update the initial acoustic models Mc when a high score is marked, it is possible to perform adequate speaker adaptation depending on the utterance environment or the like. Hence, inadequate speaker adaptation such that deteriorates the speech recognition performance can be forestalled, and subsequently the speech recognition performance can be improved.

With the speech recognition apparatus of this embodiment which performs speech recognition and speaker adaptation synchronously, the noise adaptation processing is performed in the noise adapting section 13 prior to the speaker adaptation processing in the speaker adaptation unit as with the third embodiment above. Hence, there can be attained an excellent advantage that the adverse effects of the background noises at the time of the speaker adaptation are reduced from the speaker adaptation parameters P found for the use in the speaker adaptation.

As has been described, according to the speech recognition apparatus and the speech recognition method of the invention, the speaker adapted models are generated by: (1) generating the noise adapted models by applying noise adaptation to the initial acoustic models; (2) finding the speaker adaptation parameters by applying the speaker adaptation computation to the noise adapted models; and (3) applying speaker adaptation to the initial acoustic models prior to noise adaptation using the speaker adaptation parameters. Hence, it is possible to generate the speaker adapted models from which adverse effects of the background noises at the time of speaker adaptation are reduced, and therefore can be highly effective for adapting the speaker-independent characteristics, to which speaker adaptation is originally addressed.

Also, because the speaker adapted models adapted to noises are generated by applying noise adaptation to the speaker adapted models adapted to the speaker at the time of speech recognition, and the speech recognition processing is performed using the speaker adapted models adapted to noises, it is possible to perform speech recognition using the noise- and speaker-adapted models adapted to both the background noises at the utterances for recognition and the speaker-independent characteristics. A high recognition performance can be thus achieved in various utterance environments.

## Claims

1. A speech recognition apparatus for applying speaker adaptation to acoustic models based on feature vectors of utterances, said apparatus comprising:

    speech recognition means (2) for comparing said acoustic models against said feature vector of utterances, and outputting a recognition result specifying a sequence acoustic models having maximum likelihood, a first score (FSCR) indicating a value of the maximum likelihood, and a second score (SSCR) indicating a value of second highest likelihood;
    judging means (6) for comparing an evaluation value based on said first score (FSCR) and said second score (SSCR) with a pre-set threshold value (THD), and judging said recognition result as being true when said evaluation value is in a specific relation with respect to said threshold value; and
    speaker adaptation processing means (7) for applying speaker adaptation to said acoustic models once said judging means judges said recognition result as being true.

2. The speech recognition apparatus according to claim 1, wherein:

    said judging means (6) judges said recognition result as being false when said evaluation value is not in the specific relation with respect to said threshold value; and
    said speaker adaptation processing means (7) does not apply speaker adaptation to said acoustic models when said recognition result is judged as being false.

3. The speech recognition apparatus according to claim 1, wherein said evaluation value is computed from a difference value between said first score (FSCR) and said second score (SSCR).

4. The speech recognition apparatus according to claim 2, further comprising means for inhibiting an output of said recognition result and providing information indicating that said recognition result is false when said judging means (6) judges said recognition result as being false.

5. A speech recognition method for applying speaker adaptation to acoustic models based on feature vectors of utterances, said method comprising:

    a first step of comparing said acoustic models against said feature vector of utterances, and outputting a recognition result specifying a sequence of acoustic models having maximum likelihood, a first score (FSCR)

indicating a value of the maximum likelihood, and a second score (SSCR) indicating a value of second highest likelihood;

a second step of comparing an evaluation value based on said first score(FSCR) and said second score (SSCR) with a pre-set threshold value (THD), and judging said recognition result as being true when said evaluation value is in a specific relation with respect to said threshold value(THD); and

a third step of applying speaker adaptation to said acoustic models when said recognition result is judged as being true in said second step.

6. The speech recognition method according to claim 5, wherein:

in said second step, said recognition result is judged as being false when said evaluation value is not in the specific relation with respect to said threshold value (THD); and

in said third step, speaker adaptation is not applied to said acoustic models when said recognition result is judged as being false.

7. The speech recognition method according to claim 5, wherein said evaluation value is computed from a difference value between said first score (FSCR) and said second score (SSCR).

8. The speech recognition method according to claim 6, wherein when said recognition result is judged as being false in said second step, an output of said recognition result is inhibited and information is provided to indicate that said recognition result is false.

9. A speech recognition apparatus, comprising:

storage means (11) having initial acoustic models;

noise adapting means (13) for generating noise adapted models by applying noise adaptation to said initial acoustic models in said storage means (11) using background noises at a time of speaker adaptation;

speaker adaptation parameter calculating means (14) for performing speaker adaptation computation with respect to said noise adapted models generated in said noise adapting means (13), using utterances uttered at the time of said speaker adaptation, and thereby calculating a speaker adaptation parameter for converting said noise adapted models into noise-superimposed speaker adapted models; and

acoustic model updating means (15) for generating speaker adapted models by applying speaker adaptation to said initial acoustic models in said storage means (11) using said speaker adaptation parameter, and replacing said initial acoustic models with said speaker adapted models so as to be updated and newly stored in said storage means (11).

10. The speech recognition apparatus according to claim 9, further comprising:

recognition processing means (19) for performing speech recognition processing at a time of speech recognition,

wherein said noise adapting means (13) generates speaker adapted models adapted to noises by applying noise adaptation to said speaker adapted models updated and newly stored in said storage means (11), using background noises during a silent period at the time of said speech recognition, and supplies said speaker adapted models adapted to noises to said speech recognition means as acoustic models for speech recognition of the utterances.

11. A speech recognition apparatus, comprising:

storage means (11) having initial acoustic models;

noise adapting means (13) for generating noise adapted models by applying noise adaptation to said initial acoustic models in said storage means (11), using background noises during a silent period at a time of speech recognition;

recognition processing means (19) for performing speech recognition by comparing utterances uttered during an utterance period at the time of said speech recognition and to be subjected to speech recognition, against said noise adapted models generated in said noise adapting means (13);

speaker adaptation parameter calculating means (14) for performing speaker adaptation computation with respect to said noise adapted models generated in said noise adapting means (13), using said utterances to be subjected to speech recognition, and thereby calculating a speaker adaptation parameter for converting said noise adapted models into noise-superimposed speaker adapted models; and

acoustic model updating means (15) for generating speaker adapted models by applying speaker adaptation to said initial acoustic models in said storage means using said speaker adaptation parameter, and replacing said initial acoustic models with said speaker adapted models so as to be updated and newly stored in said storage means (11).

12. The speech recognition apparatus according to claim 11, wherein said speaker adaptation parameter calculating means (14) and said acoustic model updating means (15) generate said speaker adapted models and replace said initial acoustic models with said speaker adapted models so as to be updated and newly stored in said storage means (11) when a reliability of a recognition result from said recognition processing means (19) is high.

13. A speech recognition method, comprising:

a noise adaptation processing step of generating noise adapted models by applying noise adaptation to initial acoustic models stored in storage means (11), using background noises at a time of speaker adaptation;
a speaker adaptation parameter calculating step of performing speaker adaptation computation with respect to said noise adapted models generated in said noise adaptation processing step, using utterances uttered at the time of said speaker adaptation, and thereby calculating a speaker adaptation parameter for converting said noise adapted models into noise-superimposed speaker adapted models; and
a acoustic model updating step of generating speaker adapted models by applying speaker adaptation to said initial acoustic models in said storage means (11) using said speaker adaptation parameter, and replacing said initial acoustic models with said speaker adapted models so as to be updated and newly stored in said storage means (11).

14. The speech recognition method according to claim 13, wherein:

in said noise adaptation processing step, speaker adapted models adapted to noises are generated by applying noise adaptation to said speaker adapted models updated and newly stored in said storage means (11), using background noises during a silent period at a time of speech recognition; and
said method further comprises a speech recognition processing step of performing speech recognition by comparing said speaker adapted models adapted to noises against utterances to be subjected to speech recognition during an utterance period at the time of said speech recognition.

15. A speech recognition method, comprising:

a noise adaptation processing step of generating noise adapted models by applying noise adaptation to initial acoustic models stored in storage means (11), using background noises during a silent period at a time of speech recognition;
a recognition processing step of performing speech recognition by comparing utterances to be uttered during an utterance period at the time of said speech recognition and to be subjected to speech recognition, against said noise adapted models generated in said noise adaptation processing step;
a speaker adaptation parameter calculating step of performing speaker adaptation computation with respect to said noise adapted models generated in said noise adaptation processing step, using said utterances to be subjected to speech recognition, and thereby calculating a speaker adaptation parameter for converting said noise adapted models into noise-superimposed speaker adapted models; and
a acoustic model update processing step of generating speaker adapted models by applying speaker adaptation to said initial acoustic models in said storage means (11) using said speaker adaptation parameter, and replacing said initial acoustic models with said speaker adapted models so as to be updated and newly stored in said storage means (11).

16. The speech recognition method according to claim 15, wherein, in said speaker adaptation parameter calculating step and said acoustic model update processing step, said speaker adapted models are generated in such a manner that said initial acoustic models are replaced with said speaker adapted models so as to be updated and newly stored in said storage means (11) when a reliability of a recognition result in said recognition processing step is high.

FIG.1

# FIG.2 A

NUMBER OF
WORDS/SENTENCES

Q(SSCR)

P(FSCR)

0     0.2     0.4     0.6     0.8     1.0     1.2

LIKELIHOOD VALUE

# FIG.2 B

NUMBER OF
WORDS/SENTENCES

Q(SSCR)"

P(FSCR)"

0     0.2     0.4     0.6     0.8     1.0     1.2

LIKELIHOOD VALUE

# FIG.2 C

NUMBER OF
WORDS/SENTENCES

WT

WR

T(G(L))

R(G(L))

0.00   0.05   0.10   0.15   0.20   0.25   0.30   0.35   0.40   0.45   0.50   0.55   0.60

THD

EVALUATION VALUE G(L)

# FIG.3

```
    ┌─────────────────────┐
    │   START SPEAKER      │
    │ ADAPTATION PROCESSING│
    └─────────────────────┘
              │
              ▼
    ┌─────────────────────┐
    │ START INPUT OF SPEECH│──── S100
    └─────────────────────┘
              │
              ▼
    ┌─────────────────────┐
    │  SPEECH RECOGNITION  │──── S102
    └─────────────────────┘
              │
              ▼
    ┌─────────────────────┐
    │  CALCULATE SCORE     │──── S104
    │  EVALUATION VALUE    │
    └─────────────────────┘
              │
              ▼              S106
         ◇ SCORE ◇
    EVALUATION VALUE > THRESHOLD ──── NO
         VALUE ?                       │
              │ YES                    │
              ▼                        │
    ┌─────────────────────┐            │
    │  SPEAKER ADAPTATION  │──── S108   │
    └─────────────────────┘            │
              │                        │
              ▼                        │
    ┌─────────────────────┐            │
    │  UPDATE ACOUSTIC     │──── S110   │
    │  MODELS              │            │
    └─────────────────────┘            │
              │◄───────────────────────┘
              ▼
    ┌─────────────────────┐
    │   END SPEAKER        │
    │ ADAPTATION PROCESSING│
    └─────────────────────┘
```

# FIG.4

INPUT SPEECH v(t) → **1** ACOUSTIC ANALYZING SECTION → V(n) → **2** SPEECH RECOGNITION PROCESSING SECTION

**3** WORD MODEL GENERATING SECTION ←WRD— **4** WORD DICTIONARY

~HMMw

**5** ACOUSTIC MODEL STORING SECTION (PHONEMES HMM) ~HMMsb

PHONEME MODELS BEFORE ADAPTATION (HMMsb)

PHONEME MODELS AFTER ADAPTATION (HMMsb")

**6** TRUE/FALSE JUDGING SECTION

SSCR~ ~FSCR ~RSLT

**7** SPEAKER ADAPTATION PROCESSING SECTION

RCG → **8** FALSE JUDGMENT RESPONDING SECTION → OUTPUT RECOGNITION RESULT

**9** DISPLAY SECTION

EP 1 357 541 A2

# FIG.5

SPEAKER ADAPTATION UNIT

SPEECH MODEL UPDATING SECTION  15

SPEAKER ADAPTATION PARAMETER CALCULATING SECTION  14

P

Mc

Mc″

Mc′

INITIAL SPEECH MODEL STORING SECTION  11

SPEAKER ADAPTED MODEL STORING SECTION  12

NOISE ADAPTING SECTION  13

RECOGNITION PROCESSING SECTION  19

Mc

Mc

Mreg

OUTPUT RECOGNITION RESULT

N(n)

V(n)

V(n)

18

ACOUSTIC ANALYZING SECTION  16

V(t)

17

# FIG.6

START SPEAKER
ADAPTATION

GENERATE NOISE ADAPTED MODELS Mc'
BY APPLYING NOISE ADAPTATION TO
INITIAL SPEECH MODELS Mc — S100'

GENERATE SPEAKER ADAPTATION
PARAMETERS P (TRANSFORMATION
MATRIX Wm' & OFFSET VECTOR bm') BASED
ON NOISE ADAPTED MODELS Mc' AND
FEATURE VECTOR SEQUENCE V(n) — S102'

GENERATE SPEAKER ADAPTED MODELS Mc"
USING SPEAKER ADAPTATION PARAMETERS P
(TRANSFORMATION MATRIX Wm' & OFFSET
VECTOR bm') AND INITIAL SPEECH MODELS Mc — S104'

UPDATE CONTENTS IN SPEAKER
ADAPTATION MODEL STORING SECTION — S106'

END SPEAKER
ADAPTATION

# FIG.7

```
                    ┌──────────────────┐                        SPEAKER
                    │  INITIAL SPEECH  │                    ADAPTATION UNIT
              11 ───│  MODEL STORING   │
                    │     SECTION      │
                    └──────────────────┘
                           │ Mc
                           ▼                        Mc
                    ┌──────────────────┐ ─────────────────►┌──────────────────┐ 15
                    │ SPEAKER ADAPTED  │                    │  SPEECH MODEL    │
              12 ───│  MODEL STORING   │                    │ UPDATING SECTION │
                    │     SECTION      │◄──────────────────└──────────────────┘
                    └──────────────────┘        Mc″                  ▲
                           │ Mc                                      │ P
```

ACOUSTIC ANALYZING SECTION — 16

v(t)   17   V(n)   18   N(n)

NOISE ADAPTING SECTION — 13

Mc′

SPEAKER ADAPTATION PARAMETER CALCULATING SECTION — 14

V(n)

Mc′ (EQUIVALENT TO Mreg)

RECOGNITION PROCESSING SECTION — 19

SCR

OUTPUT RECOGNITION RESULT

EP 1 357 541 A2

# FIG.8

```
┌──────────────────────┐
│    START SPEECH       │
│    RECOGNITION        │
└──────────┬───────────┘
           │
           ▼
┌──────────────────────────┐
│  APPLY NOISE ADAPTATION TO │─── S200
│  INITIAL SPEECH MODELS Mc  │
└──────────┬───────────────┘
           │
           ▼
┌──────────────────────────────┐
│    GENERATE RECOGNITION        │─── S202
│ CANDIDATE WORD/SENTENCE MODELS │
└──────────┬───────────────────┘
           │
           ▼
┌──────────────────────────────┐
│  COMPARISON (OUTPUT RECOGNITION │─── S204
│    RESULT & SCORE DATA)         │
└──────────┬───────────────────┘
           │
           ▼
        S206
      ◇ HIGH SCORE ? ◇──── NO
           │ YES
           ▼
┌──────────────────────────────┐
│  GENERATE SPEAKER ADAPTATION   │
│    PARAMETERS P BASED ON        │─── S208
│  NOISE ADAPTED MODELS Mc' AND   │
│  FEATURE VECTOR SEQUENCE V(n)   │
└──────────┬───────────────────┘
           │
           ▼
┌──────────────────────────────┐
│   GENERATE SPEAKER ADAPTED      │
│   MODELS Mc" USING SPEAKER       │─── S210
│  ADAPTATION PARAMETERS P AND     │
│   INITIAL SPEECH MODELS Mc       │
└──────────┬───────────────────┘
           │
           ▼
┌──────────────────────────────┐
│ UPDATE INITIAL SPEECH MODELS Mc │─── S212
│ TO SPEAKER ADAPTED MODELS Mc"    │
└──────────┬───────────────────┘
           │
           ▼
┌──────────────────────┐
│ END SPEECH RECOGNITION │
└──────────────────────┘
```